## Europäisches Patentamt

## European Patent Office

## Office européen des brevets

(19)

(11) Veröffentlichungsnummer: **0 104 366 B1**

(12) **EUROPÄISCHE PATENTSCHRIFT**

(45) Veröffentlichungstag der Patentschrift:
02.04.86

(21) Anmeldenummer: 83107586.6

(22) Anmeldetag: 02.08.83

(51) Int. Cl.⁴: **B 65 G  47/26,** B 65 G  17/24

(54) **Stetigförderer, insbesondere Tragkettenförderer.**

(30) Priorität: 31.08.82  DE 3232319
27.09.82  DE 3235756

(43) Veröffentlichungstag der Anmeldung:
04.04.84 Patentblatt 84/14

(45) Bekanntmachung des Hinweises auf die Patenterteilung:
02.04.86 Patentblatt 86/14

(84) Benannte Vertragsstaaten:
**DE FR GB IT NL SE**

(56) Entgegenhaltungen:
**DE - A - 2 556 090**
**GB - A - 1 586 049**
**US - A - 3 915 288**

(73) Patentinhaber: **FOCKE & CO., Siemensstrasse 10,
D-2810 Verden (DE)**

(72) Erfinder: **Focke, Heinz, Moorstrasse 64, D-2810 Verden
(DE)**

(74) Vertreter: **Bolte, Erich, Dipl.-Ing., Patentanwälte
Dipl.-Ing. Hans Meissner Dipl.-Ing. Erich Bolte
Hollerallee 73, D-2800 Bremen 1 (DE)**

ACTORUM AG

## Beschreibung

Die Erfindung betrifft einen Stetigförderer, insbesondere Tragkettenförderer, zum Transport von Stückgut, vorzugsweise Zigaretten-Packungen, mit in Förderrichtung bewegten, frei drehbaren Rollen (Staurollen), auf denen die Stückgüter aufliegen und die bei einem Stau der Stückgüter sich drehend unter letzteren fortbewegen.

Beim Transport von Stückgütern mittels Stetigförderer stellt sich das Problem, dass im Gegensatz zu Schüttgütern Stückgüter nicht in einem fortlaufenden Förderfluss transportierbar sind, sondern mit überwiegend unregelmässigen, mehr oder weniger grossen Abständen. Dabei lassen sich bei kontinuierlicher Stückgutzufuhr und diskontinuierlicher Stückgutabfuhr am Ende des Stetigförderers Staus nicht vermeiden, d.h. die Förderstrecke muss als Puffer benutzt werden. Um in diesen Fällen die mechanischen Einwirkungen auf das Stückgut infolge des weiterlaufenden Stetigförderers möglichst klein zu halten, sind unterschiedliche, z.T. recht aufwendige, spezielle Stetigförderer bekannt. Diese funktionieren überwiegend nur in Abhängigkeit vom Gewicht der zu transportierenden Gegenstände, derart, dass diese ein gewisses Mindestgewicht aufweisen müssen.

Ein einfacher, bekannter Stetigförderer, der eine Pufferung der zu fördernden Stückgüter bei weitestgehender Schonung derselben ermöglicht, ist ein Tragkettenförderer mit zweiseitigen Ketten, die durch quergerichtete Achsen miteinander verbunden sind, auf denen frei drehbare Staurollen gelagert sind. Auf mehreren derart hintereinander angeordneten Staurollen lagern die zu transportierenden Stückgüter. Solange diese ungehindert mit der Fördergeschwindigkeit des Tragförderers transportiert werden, bewegen die beiden seitlichen Tragketten die Staurollen stillstehend mit. Sobald die Stückgüter mit einer im Vergleich zur Geschwindigkeit des Tragkettenförderers verringerten Geschwindigkeit transportiert werden bzw. infolge eines Staus vollständig stillstehen, üben diejenigen Staurollen, auf denen Stückgut aufliegt, eine Drehbewegung aus. Dadurch wird die Geschwindigkeitsdifferenz zwischen Stückgut und Tragkettenförderer ausgeglichen, ohne dass die Auflageflächen der Stückgüter einer mechanischen Reibbelastung durch den Tragkettenförderer ausgesetzt sind.

Der Aufbau eines solchen dem Stand der Technik gehörenden Stetigförderers ist sehr aufwendig und platzintensiv. Darüber hinaus muss zum einwandfreien Leichtlauf der Staurollen auf den zur Lagerung dienenden Wellen ein einwandfreier Gleichlauf der beiden nebeneinanderliegenden Tragketten gewährleistet sein. Dieses ist insbesondere dann nicht mehr der Fall, wenn bei älteren Tragkettenförderern sich das Spiel in den Verbindungsstellen der einzelnen Kettenglieder infolge natürlichen Verschleisses vergrössert. Weiterhin ist der bekannte Tragkettenförderer nicht dazu geeignet, Kurven in waagerechter Ebene zu durchlaufen.

Die Aufgabe der Erfindung ist daher, einen Stetigförderer zu schaffen, der bei einfacher und platzsparender Bauweise einen schonenden Transport insbesondere auch leichter Stückgüter in zuverlässiger Weise ermöglicht.

Zur Lösung dieser Aufgabe ist die Erfindung dadurch gekennzeichnet, dass an einem einzelnen Zugorgan (Hülsenkette) beidseitig Staurollen angeordnet sind.

Durch Verwendung nur eines Zugorgans ist der Aufbau des erfindungsgemässen Stetigförderers wesentlich einfacher und kostengünstiger. Darüber hinaus können im Gegensatz zum Stetigförderer mit zwei seitlichen Zugorganen beim erfindungsgemässen Stetigförderer keine Gleichlaufprobleme mehr entstehen. Ebenfalls ist dieser Stetigförderer dazu geeignet, in begrenztem Masse Kurven zu durchlaufen.

Nach einer weiteren Ausgestaltung der Erfindung liegt das Zugorgan des Stetigförderers auf einer Gleitleiste auf, die es gleichzeitig formschlüssig führt. Die Gleitleiste ist vorzugsweise mittig auf einer U-förmigen Gleitbahn angeordnet, deren aufrechte seitliche Führungswangen gleichzeitig zur seitlichen Führung der auf dem Stetigförderer transportierten Stückgüter dienen. Besonders vorteilhaft lassen sich für die Gleitbahn handelsübliche U-Profile verwenden, die je nach Verwendungszweck aus unterschiedlichen Materialien bestehen können.

Zur gleichmässigen Verteilung des Gewichts der Stückgüter auf beide Seiten des Zugorganes sind die Staurollen hintereinander auf wechselnden Seiten entlang desselben gleichmässig verteilt angeordnet. Ebenfalls sind auf beiden Seiten neben dem Zugorgan gleichmässig verteilt Gleitstücke angeordnet, die sich auf einer waagerechten Gleitfläche der Gleitbahn abstützen.

Dadurch wird erreicht, dass das Zugorgan in Querrichtung annähernd gerade auf der Gleitleiste läuft und im Falle einer aussermittigen Belastung des Zugorgans infolge ungleichförmiger Beladung des Stetigförderers diese sich auf der korrespondierend ausgebildeten Gleitleiste nicht verkeilt. Vorzugsweise sind die Gleitstücke jeweils unmittelbar vor bzw. hinter einer Staurolle auf der gleichen Seite derselben neben dem Zugorgan angeordnet, damit die vom Stückgut auf das Zugorgan übertragene Gewichtskraft weitgehend direkt auf das betreffende Gleitstück übertragen wird. Es ist nicht notwendig, jeder Staurolle ein Gleitstück zuzuordnen. Je nach Gewicht der zu transportierenden Stückgüter ist es ausreichend, wenn entlang des Zugorgans jeweils einer gleichen Anzahl von Staurollen ein Gleitschuh auf jeder Seite zugeordnet wird.

Anstelle der Gleitstücke können auch Rollen verwendet werden, die auf der Gleitbahn laufen. Dadurch wird die Reibung des Stetigförderers herabgesetzt, wodurch dieser sich besonders zum Einsatz bei höheren Transportgeschwindigkeiten eignet.

Als Zugorgan kommt nach einer besonders vorteilhaften Ausgestaltung der Erfindung vorzugsweise eine handelsübliche Hülsenkette in Betracht. Diese weist durch Buchsen sowie Bolzen verbundene seitliche Laschen auf. Alternativ kann eine Rollenkette zum Einsatz kommen, die im Gegensatz zur Hülsenkette auf den Hülsen gelagerte Rollen aufweist.

Durch ein Abwälzen dieser Rollen auf der Oberfläche der Gleitleiste lässt sich der Reibwiderstand des Tragkettenförderers herabsetzen. Durch die Verwendung solcher Ketten als Zugorgan des Tragkettenförderers ist eine seitliche Anbringung der Staurollen sowie der Gleitstücke besonders einfach möglich. Es sind nämlich lediglich die zur Verbindung der einzelnen Kettenglieder der Ketten dienenden Bolzen durch seitlich überstehende (längere) Kettenbolzen an den entsprechenden Stellen, an denen Staurollen bzw. Gleitstücke gelagert werden sollen, zu ersetzen. Alternativ zur Verwendung einer Hülsen- bzw. Rollenkette als Zugorgan können auch eine Rundgliederkette, ein Seil oder ein Riemen als Zugorgan dienen.

Eine weitere, besonders vorteilhafte Ausführungsform der Erfindung sieht die Anordnung eines Federelements an der Lagerung der Staurolle vor, wodurch die Reibung zwischen Staurolle und Lagerelement heraufgesetzt werden kann. Auf diese Weise ist es möglich, ein infolge eines Staus zum Stillstand gekommenes Stückgut wieder schneller zu beschleunigen. Als Federelement kommen insbesondere ein oder mehrere Tellerfedern in Betracht.

Um die Reibung zwischen Stückgut und Staurollen zu erhöhen, sieht die Erfindung die Anordnung eines Reibbelages auf den äusseren Mantelflächen der Staurollen vor. Durch Herstellung dieser Reibbeläge aus einem Elastomer, beispielsweise Silikon, wird die schonende Auflage des Stückgutes aus dem Stetigförderer erreicht. Im Verschleissfalle lassen sich die Reibbeläge in einfacher Weise ohne Ausbau der Staurollen kostengünstig ersetzen.

Weitere Merkmale der Erfindung betreffen die konstruktive Ausgestaltung der Lagerung der Staurollen bzw. der Gleitstücke an der Hülsenkette.

Ausführungsbeispiele der Erfindung werden anhand der Zeichnung näher erläutert.

Es zeigen:

Fig. 1 eine schematische Draufsicht auf einen Tragkettenförderer,

Fig. 2 eine Teilansicht auf den Tragkettenförderer gemäss Fig. 1, in vergrössertem Massstab und teilweisem Schnitt,

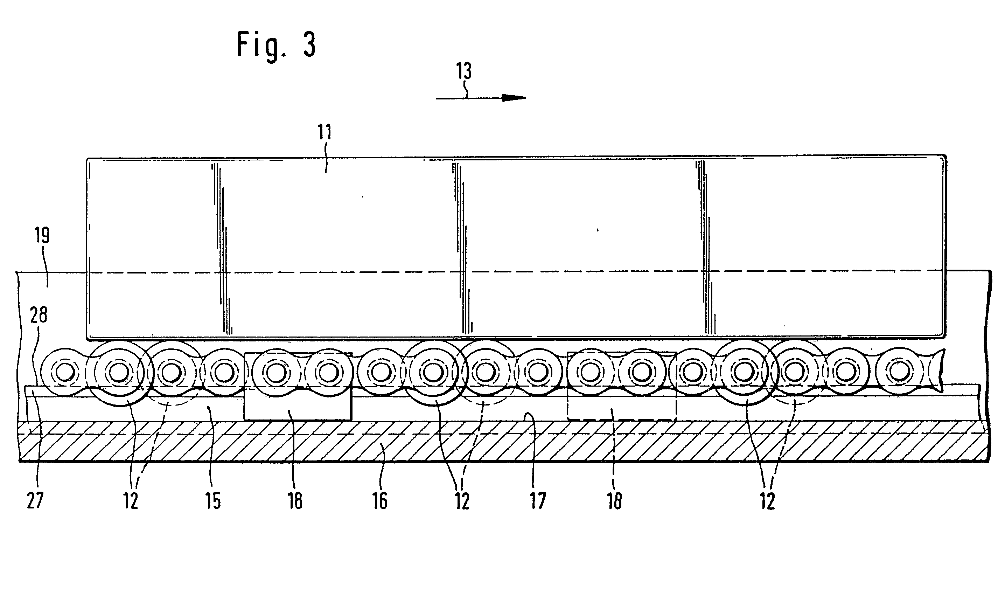

Fig. 3 eine Seitenansicht des Tragkettenförderers gemäss Fig. 2, mit einer auf mehreren Staurollen aufliegenden Zigaretten-Stange,

Fig. 4 einen Querschnitt durch den Tragkettenförderer gemäss Linie IV-IV in Fig. 1, in stark vergrössertem Massstab sowie mit auf den Staurollen aufliegender Zigaretten-Stange,

Fig. 5 einen Schnitt gemäss der Linie V-V durch den Tragkettenförderer gemäss Fig. 1, in stark vergrössertem Massstab und mit auf den Staurollen aufliegender Zigaretten-Stange,

Fig. 6 ein zweites Ausführungsbeispiel eines Tragkettenförderers in einer Ansicht gemäss Fig. 2,

Fig. 7 einen Querschnitt durch den Tragkettenförderer gemäss Linie VII-VII mit auf den Staurollen aufliegender Zigaretten-Stange, und

Fig. 8 ein weiteres Ausführungsbeispiel einer Staurollenlagerung in einer Ansicht gemäss Fig. 4.

Die vorliegenden Ausführungsbeispiele zeigen einen Stetigförderer in Form eines Tragkettenförderers, mit einem einzigen Zugorgan. Dieser Tragkettenförderer eignet sich besonders zum Einsatz in der Verpackungstechnik, nämlich zum Transport von empfindlichen Zigaretten-Packungen, die gruppenweise zu einer Zigaretten-Stange 11 zusammengefügt sind. Eine solche Zigaretten-Stange 11 besitzt eine quaderförmige, längliche Gestalt.

Als Zugorgan des Tragkettenförderers dient im vorliegenden Fall eine Hülsenkette 10. Aufgebaut ist die Hülsenkette 10 in genormter Weise aus gelenkig miteinander verbundenen Kettengliedern. Diese bestehen aus jeweils zwei seitlichen Laschen 20 bzw. 21, indem abwechselnd zwei äussere Laschen 20 mit zwei inneren Laschen 21 teilweise überlappend verbunden sind. Sämtliche Laschen 20 bzw. 21 weisen in ihren Endbereichen Bohrungen 22 bzw. 23 auf, durch die Bolzen zur Verbindung der nebeneinanderliegenden Laschen 20, 21 geführt sind. Auf jedem Bolzen ist eine Hülse 25 als Abstandshalter zwischen den Laschen 20, 21 gelagert, die derart an ihren Stirnseiten abgesetzt sind, dass sie sich an den Innenseiten der äusseren Laschen 20 abstützen und die inneren Laschen 21 mit geringfügigem Spiel sichern, wodurch eine gelenkige Verbindungsstelle der einzelnen Kettenglieder der Hülsenkette 10 entsteht. Es kann auch eine Tragkette ähnlichen Aufbaus, beispielsweise eine Rollenkette, verwendet werden.

Als Tragorgan für die Zigaretten-Stangen 11 dienen Staurollen 12 bzw. 39, die mittels quer zur Förderrichtung (Pfeil 13) angeordneter, waagerechter Kettenbolzen 14 an der Hülsenkette 10 frei drehbar gelagert sind. Die Staurollen 12 bzw. 39 unterscheiden sich durch ihren Aufbau. So ist die Staurolle 12 zylindrisch gestaltet mit über die gesamte Länge durchgehender (äusserer) Mantelfläche. Dagegen weist die Staurolle 39 auf ihrer Mantelfläche einen zusätzlichen, rohrförmigen Reibbelag 40 aus dehnbarem Material mit hohem Reibbeiwert auf. Durch zwei umlaufende Kragen 41 an den Stirnseiten der Staurolle 39 ist der Reibbelag in Axialrichtung auf der Staurolle 39 gehalten. Ein radiales Rutschen des Reibbelages 40 wird durch Reibschluss zur Mantelfläche der Staurolle 39 verhindert, indem dieser unter Vorspannung über den Kragen 41 hinweg auf die Staurolle 39 aufgezogen ist. Um sicherzustellen, dass die Zigaretten-Stangen 11 ausschliesslich auf den Reibbelägen 40 der Staurollen 39 aufliegen, sind die Kragen 41 im Durchmesser kleiner als die Aussendurchmesser der Reibbeläge 40 bemessen. Zur Herabsetzung der Reibung der Staurollen 39 an Bauteilen der Lagerung an der Hülsenkette 10 weisen dessen Stirnseiten Absätze 42 auf. Hergestellt sind die Staurollen 12 bzw. 39 aus reibfestem Kunststoff, nämlich Polyamid. Die Reibbeläge sind dagegen aus einem Elastomer, insbesondere Silikon, hergestellt.

Abgestützt und geführt ist die Hülsenkette 10 durch eine längs zur Förderrichtung (Pfeil 13) verlaufende Gleitleiste 15. Diese ist auf einer U-förmig ausgebildeten Gleitbahn 16 angeordnet durch eine lösbare mittige Verbindung auf einer Gleitfläche 17 der Gleitbahn 16. Weiterhin ist die Hülsenkette 10 durch beidseitig mit Abstand neben dieser angeordnete Gleitstücke 18 gegen ein Kippen quer zur Förderrichtung (Pfeil 13) geführt. Dazu stützen sich die Gleitstücke 18 auf der Gleitfläche 17 der Gleitbahn 16 ab. Ausser der Gleitfläche 17 weist die U-förmige Gleitbahn 16 zwei seitliche, aufrechte Führungswangen 19 auf. Die in Längsrichtung des Tragkettenförderers verlaufenden Führungswangen 19 ragen mit ihren oberen Enden über eine durch die Staurollen 12 gebildete Ebene hinaus. Auf diese Weise sind die Zigaretten-Stangen 11 auf dem Tragkettenförderer seitlich geführt.

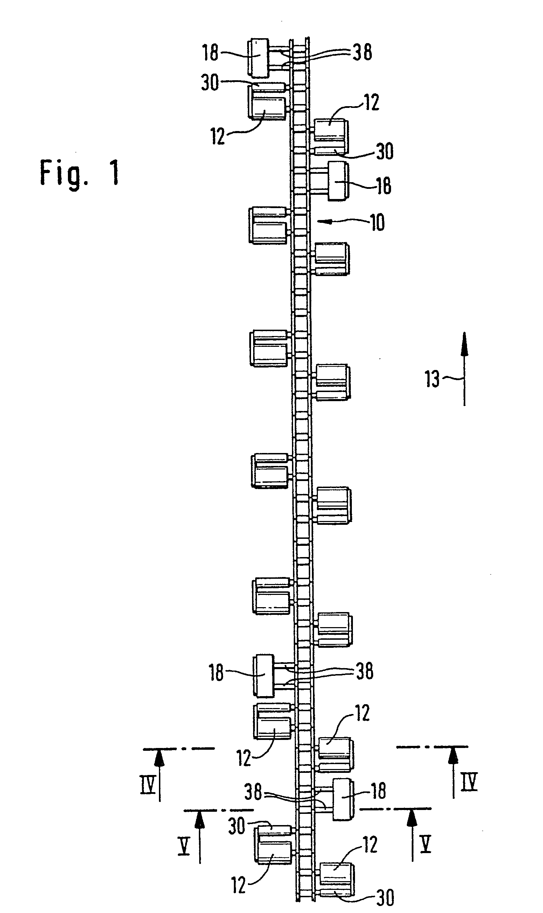

In der Fig. 1 ist ein Ausführungsbeispiel mit an der Hülsenkette 10 angeordneten Staurollen 12 dargestellt. Ebenfalls ist die Zuordnung der Gleitstücke 18 zu den Staurollen 12 aus der Fig. 1 zu entnehmen. Hier sind die Staurollen 12 gruppenweise gleichmässig über die Hülsenkette 10 verteilt angeordnet. Dazu sind jeweils zwei Staurollen 12 an einander gegenüberliegenden Seiten der Hülsenkette 10 an hintereinanderfolgenden, gelenkigen Verbindungsstellen der Kettenglieder gelagert. Da jeweils zwei Kettenbolzen 14 zur Anordnung einer Staurolle 12 neben der Hülsenkette 10 verwendet sind, sind dazu in vier aufeinanderfolgenden Verbindungsstellen der Kettenglieder der Hülsenkette 10 Kettenbolzen 14 angebracht. Diese weisen jeweils paarweise in die eine oder andere Richtung quer zur Längsrichtung des Tragkettenförderers. Zwischen zwei in der beschriebenen Weise zu Gruppen hintereinander angeordneten Staurollen 12 folgt mit Abstand die nächste Gruppe zweier hintereinander angeordneter Staurollen 12. Im vorliegenden Ausführungsbeispiel kommt dieser Abstand dadurch zustande, dass zwei gelenkige Verbindungsstellen der Hülsenkette 10 keine Kettenbolzen 14 tragen, sondern gemäss ihrem ursprünglichen Aufbau durch Bolzen gebildet sind. Dieser Abstand ist notwendig, um in Förderrichtung (Pfeil 13) gesehen hinter bzw. vor einer gleichbleibenden Anzahl von Staurollen 12 auf beiden Seiten der Hülsenkette 10 die Gleitstücke 18 anzuordnen, die ebenfalls auf zwei Kettenbolzen 14 gelagert sind. Im vorliegenden Fall ist jeder fünften Staurolle 12 an jeder Seite der Hülsenkette 10 ein Gleitstück 18 vor- bzw. nachgeordnet, und zwar mit geringstmöglichem Abstand zu der betreffenden Staurolle 12. Durch das in Förderrichtung (Pfeil 13) des Tragkettenförderers gesehen auf wechselnden Seiten der Hülsenkette 10 hintereinanderfolgende Anordnen der Staurollen 12 wird das Gewicht der Zigaretten-Stangen 11 gleichmässig auf die Hülsenkette 10 übertragen. Je nach Art und Gewicht des Fördergutes kann eine andere Verteilung der Staurollen 12 bzw. der Gleitstücke 18 vorgenommen werden.

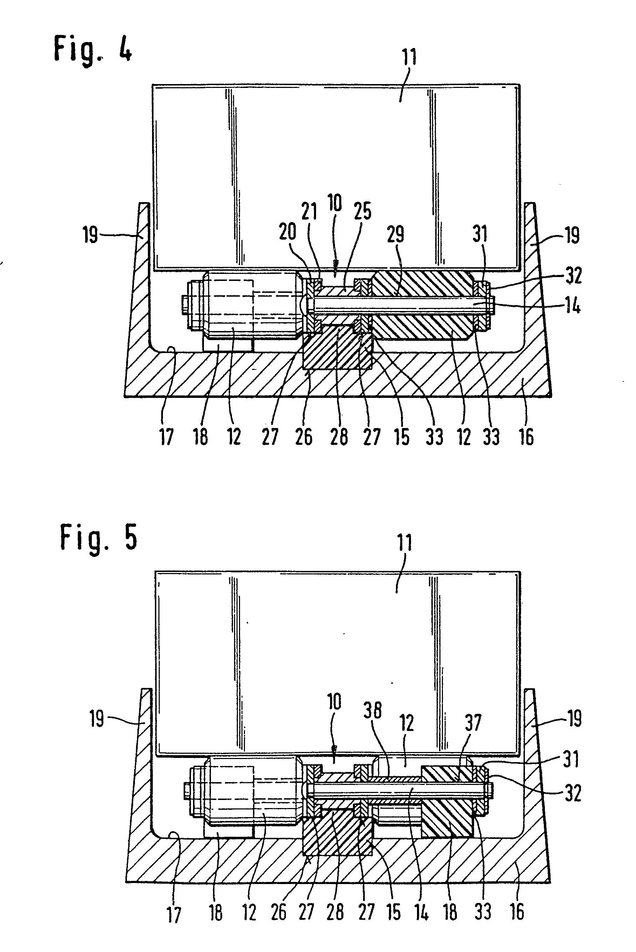

Aus den Fig. 4 bis 8 sind die Profile der Gleitleiste 15 sowie der Gleitbahn 16 zu entnehmen. Darin weist die Gleitleiste 15 ein annähernd rechteckiges Profil auf, welches teilweise in einer korrespondierend dazu ausgebildeten Ausnehmung 26 in der Mitte der Gleitfläche 17 der Gleitbahn 16 eingelassen ist. An der Oberseite weist die Gleitleiste 15 zwei seitliche, gleich grosse Freimachungen 27 rechteckförmigen Querschnitts auf. Auf diese Weise entsteht an der Oberseite der Gleitleiste 15 ein mittiger Steg 28 zur formschlüssigen Führung der Hülsenkette 10 zwischen den Innenflächen der inneren Laschen 21. Dabei ist die Breite des Steges 28 geringfügig schmaler als der lichte Abstand zwischen den inneren Laschen 21 der Hülsenkette 10 bemessen.

Zur Sicherstellung guter Gleiteigenschaften zwischen Hülsenkette 10 und Gleitleiste 15 besteht letztere aus Kunststoff, insbesondere Polyamid.

Die Höhe der Gleitleiste 15 ist in Abhängigkeit von dem jeweils annähernd gleichen Durchmesser der Staurollen 12 so bemessen, dass deren Mantelflächen die Gleitfläche 17 der Gleitbahn 16 nicht berühren. Andererseits muss der Durchmesser der Staurollen 12 derart bemessen sein, dass die darauf aufliegenden Zigaretten-Stangen 11 die Oberseite der Hülsenkette 10 nicht berühren.

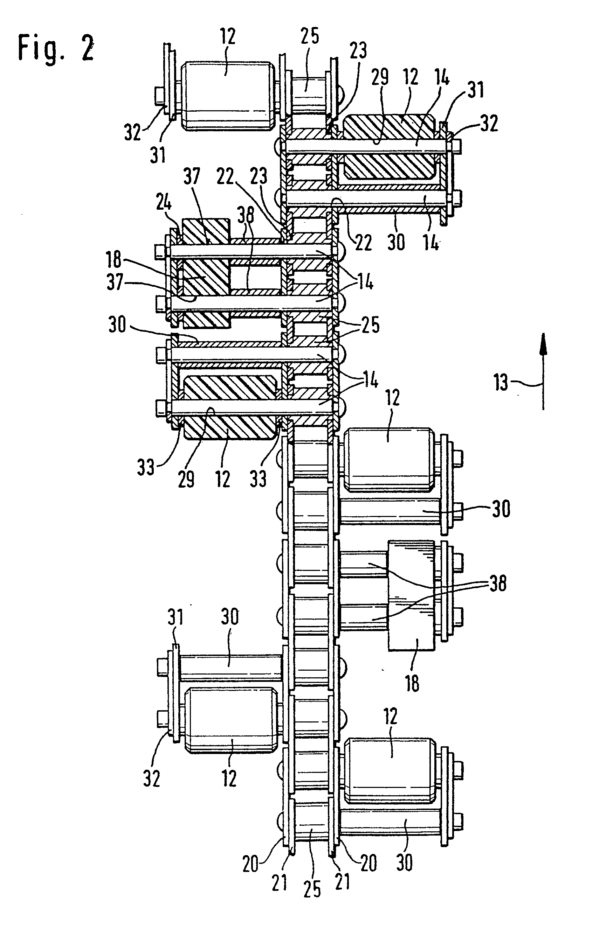

Die Lagerung der Staurollen 12 auf den Kettenbolzen 14 geht aus den Fig. 2 und 4 hervor. Die Staurollen 12 weisen eine in Längsrichtung durchgehende, zentrische Bohrung 29 auf, die zur gleitenden Lagerung der Staurollen 12 auf den Kettenbolzen 14 dient. Zur Lagerung einer Staurolle 12 sind zwei gleiche Kettenbolzen 14 vorgesehen. Diese ersetzen die üblichen (kurzen) Bolzen, wie sie zur Verbindung zweier Laschen 20 mit den inneren Laschen 21 zweier angrenzender Kettenglieder der standardmässigen Hülsenkette 10 dienen. Der zweite Kettenbolzen 14, der zur Lagerstelle einer Staurolle 12 gehört und auf dem keine Staurolle 12 gelagert ist, weist eine Distanzhülse 30 auf. Die Länge der Distanzhülse 30 ist derart bemessen, dass zwischen den Stirnflächen der Staurolle 12 und den Anlaufscheiben 33 ein ausreichendes Spiel zum leichtgängigen Drehen der Staurolle 12 gewährleistet ist. Dabei soll zwischen den Stirnflächen der Distanzhülse 30 und den ihnen zugerichteten Seiten der Lasche 20 der Hülsenkette 10 sowie der Stirnlasche 31 möglichst kein Spiel vorhanden sein, damit die beiden Laschen 20, 21 und die Hülse 25 der Hülsenkette 10 ausreichend fest zusammengepresst werden, um sicherzustellen, dass unter Belastung keine Schiefstellung der Kettenbolzen 14 stattfindet.

Um sicherzustellen, dass sich die Staurolle 12 auf dem ihr zugeordneten Kettenbolzen 14 leichtgängig dreht, ist zwischen jeder Stirnseite der Staurolle 12 und der ihr zugerichteten Seite der Lasche 20 der Hülsenkette 10 bzw. der Stirnlasche 31 eine Anlaufscheibe 33 angeordnet.

Die aus Stahl bestehenden Anlaufscheiben 33 sollen dazu führen, dass beim Drehen der Staurolle 12 eine Reibung zwischen den Stirnseiten der Staurolle 12 und den Anlaufscheiben 33 entsteht. Dadurch ist in jedem Falle eine vorteilhafte Kunststoff-Metallpaarung der Gleitlagerflächen der Staurolle 12 gegeben.

Die Verteilung der beiden Staurollen 12 und Distanzhülsen 30 auf die vier hintereinanderliegenden Kettenbolzen 14 der paarweise von gruppenweise gelagerten Paaren von Staurollen 12 geschieht in besonderer Weise. Es sind nämlich die beiden Staurollen 12 an gegenüberliegenden Seiten der Hülsenkette 10 auf hintereinanderliegenden Kettenbolzen 14 gelagert. Die Distanzhülsen 30 befinden sich in Förderrichtung (Pfeil 13) gesehen jeweils vor und hinter den beiden Staurollen 12 auf den Kettenbolzen 14. Auf diese Weise wird erreicht, dass jedes Paar von Staurollen 12 mit nur geringem Versatz in Längsrichtung des Tragkettenförderers seitlich gegenüber der Hülsenkette 10 auskragt.

Gleichermassen können die mit Reibbelägen 40 versehenen Staurollen 39 an der Hülsenkette 10 angeordnet und gelagert sein. Dabei können die Anlaufscheiben 33 entfallen, da ihre Funktion von den an den Staurollen 39 beidseitig angeordneten Absätzen 42 übernommen wird.

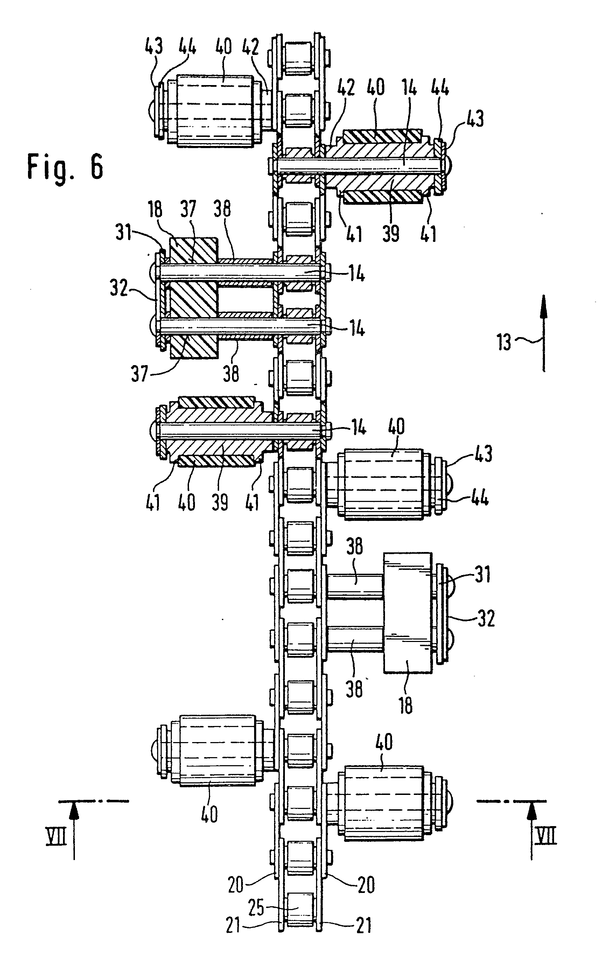

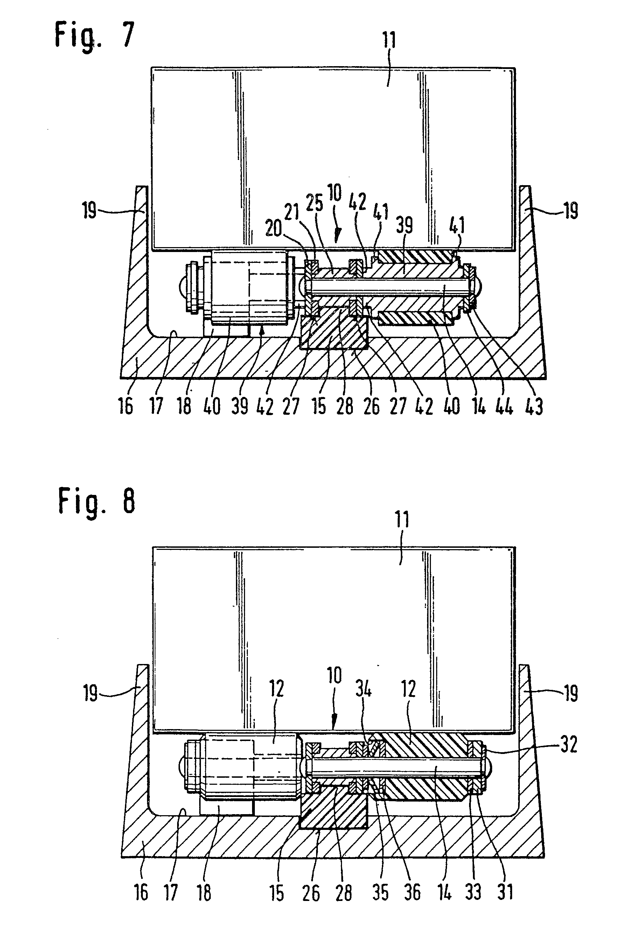

Die Fig. 6 und 7 zeigen ein weiteres Ausführungsbeispiel zur Lagerung der Staurollen. Dieses Lagerungsbeispiel zeigt Staurollen 39 mit darauf angeordneten Reibbelägen 40. Dabei dient zur Lagerung jeder Staurolle 39 nur ein einziger Kettenbolzen 14. Ein am (freien) Ende des Kettenbolzens 14 angeordneter Sicherungsring 43 dient zur axialen Fixierung der Staurolle 39 auf dem Kettenbolzen 14. Zum Ausgleich des axialen Spiels der Lagerung der Staurolle 39 ist zwischen dem Sicherungsring 43 und dem ihm zugerichteten Absatz 42 der Staurolle 39 eine Distanzscheibe 44 angeordnet, die gleichzeitig die Funktion einer Anlaufscheibe erfüllt. Auf gleiche Weise ist auch eine Lagerung der Staurollen 12 mit jeweils einem Kettenbolzen 14 möglich. In diesem Falle ist zwischen der Hülsenkette 10 und der ihr zugerichteten Stirnseite der Staurolle 12 eine separate Anlaufscheibe 33 anzuordnen.

Die Verteilung der Staurollen 39 und der Gleitstücke 18 entlang der Hülsenkette 10 ist in der Fig. 6 dargestellt. Diese entspricht im wesentlichen der Anordnung gemäss der Fig. 1. Auch hier sind die Staurollen 39 sowie die Gleitstücke 18 an unterschiedlichen Gliedern der Hülsenkette 18 gelagert.

Eine Möglichkeit, die Laufreibung der Staurollen auf den Kettenbolzen 14 zu vergrössern, zeigt die Fig. 8. Dabei ist die Bohrung der Staurolle 12 ausgehend von einer Stirnseite, nämlich der zur Hülsenkette 10 gerichteten, durch eine Aufnahmebohrung 34 vergrössert. In dieser Aufnahmebohrung 34 finden eine Tellerfeder 35 und eine weitere Anlaufscheibe 36 Aufnahme. Diese zwischen der Tellerfeder 35 und der Stirnseite der Aufnahmebohrung 34 angeordnete Anlaufscheibe 36 soll verhindern, dass die Tellerfeder die aus Kunststoff bestehende Staurolle 12 beschädigt. Durch eine entsprechende Tiefe der Aufnahmebohrung 34 wird erreicht, dass die Tellerfeder 35 die Anlaufscheiben 36 und 33 mit einer bestimmten Kraft gegen die Stirnseiten der Staurolle presst und diese sich durch die dabei entstehende zusätzliche Reibung schwerer auf dem Kettenbolzen 14 dreht. Eine schnelle Beschleunigung der Zigaretten-Stangen 11 auf dem Tragkettenförderer ist dadurch möglich. Durch Verwendung mehrerer Tellerfedern 35 bzw. Anlaufscheiben 36 oder 33 unterschiedlicher Dicke ist die axiale Vorspannung der Staurolle 12 durch die Tellerfeder veränderbar zur Anpassung des Tragkettenförderers an individuelle Transportbedingungen.

In gleicher Weise kann die Laufreibung der Staurollen 39 auf den Kettenbolzen 14 vergrössert werden.

Die Lagerung der Gleitstücke 18 ist bei allen Ausführungsbeispielen gleich. Wie aus den Fig. 2, 5 und 6 hervorgeht, ist jedes Gleitstück 18 auf zwei Kettenbolzen 14 gelagert, die mit einer Stirnlasche 31 und einem Kettenschloss 32 auf den Kettenbolzen gesichert sind. Im Gegensatz zu den Staurollen 12 bzw. 39 ist das quaderförmige Gleitstück 18 mittels zweier Bohrungen 37 fest auf den beiden Kettenbolzen 14 gelagert. Da die Gleitstücke 18 schmaler als die Staurollen 12 bzw. 39 ausgebildet sind, ist auf jedem Kettenbolzen 14 eine Distanzhülse 38 zwischen der äusseren Lasche 20 der Hülsenkette 10 und dem Gleitstück 18 angeordnet. An der gegenüberliegenden Seite des Gleitstücks 18 ist ausserdem zwischen diesem und der Stirnlasche 31 eine (dünne) Ausgleichsscheibe 24 auf den Kettenbolzen 14 angeordnet. Durch die dadurch entstehende Fixierung des Gleitstücks 18 mit möglichst grossem Abstand von der Hülsenkette 10 wird eine grösstmögliche Stützwirkung des Gleitstücks 18 erreicht. Zweckmässigerweise besteht das Gleitstück 18 aus einem verschleissfesten Kunststoff, insbesondere Polyamid.

## Patentansprüche

1. Stetigförderer, insbesondere Tragkettenförderer, zum Transport von Stückgut, vorzugsweise Zigaretten-Packungen, mit in Förderrichtung bewegten, frei drehbaren Rollen (Staurollen), auf denen die Stückgüter aufliegen und die bei einem Stau der Stückgüter sich drehend unter letzteren fortbewegen, dadurch gekennzeichnet, dass an einem einzelnen Zugorgan (Hülsenkette 10) beidseitig Staurollen (12, 39) angeordnet sind.

2. Stetigförderer nach Anspruch 1, dadurch gekennzeichnet, dass die Staurollen (12, 39) seitlich auskragend am Zugorgan (Hülsenkette 10) angeordnet sind.

3. Stetigförderer nach Anspruch 1 oder 2, dadurch gekennzeichnet, dass das Zugorgan (Hülsenkette 10) auf einer Gleitleiste (15) aufliegt und durch diese geführt ist.

4. Stetigförderer nach Anspruch 3 sowie einem oder mehreren der weiteren Ansprüche, dadurch gekennzeichnet, dass die Gleitleiste (15) annähernd mittig auf einer Gleitbahn (16) angeordnet ist.

5. Stetigförderer nach Anspruch 4 sowie einem oder mehreren der weiteren Ansprüche, dadurch gekennzeichnet, dass die Gleitbahn (16) U-förmig ausgebildet ist und eine vorzugsweise ebenflächige, waagerechte Gleitfläche (17) mit zwei seitlichen, annähernd aufrechten Führungswangen (19) zur seitlichen Führung der Stückgüter (Zigaretten-Stangen 11) aufweist, wobei die Gleitleiste (15) mittig auf der Gleitfläche (17) angeordnet ist.

6. Stetigförderer nach Anspruch 1 sowie einem oder mehreren der weiteren Ansprüche, dadurch gekennzeichnet, dass versetzt an beiden Seiten des Zugorgans (Hülsenkette 10) auf der Gleitbahn (16) aufliegende Gleitstücke (18) angeordnet sind.

7. Stetigförderer nach Anspruch 6 sowie einem oder mehreren der weiteren Ansprüche, dadurch gekennzeichnet, dass jeweils ein Gleitstück (18) mehreren Staurollen (12, 39) zugeordnet ist.

8. Stetigförderer nach Anspruch 1 sowie einem oder mehreren der weiteren Ansprüche, dadurch gekennzeichnet, dass die Staurollen (12, 39) drehbar auf fest mit dem Zugorgan (Hülsenkette 10) verbundenen, quergerichteten Kragbolzen (Kettenbolzen 14) gleitend gelagert sind.

9. Stetigförderer nach Anspruch 8 sowie einem oder mehreren der weiteren Ansprüche, dadurch gekennzeichnet, dass die Staurollen (12, 39) in Förderrichtung (Pfeil 13) versetzt zueinander angeordnet sind.

10. Stetigförderer nach Anspruch 1 sowie einem oder mehreren der weiteren Ansprüche, dadurch gekennzeichnet, dass die Staurollen (12, 39) mit einem Reibungselement versehen sind.

11. Stetigförderer nach Anspruch 1 sowie einem oder mehreren der weiteren Ansprüche, dadurch gekennzeichnet, dass als Zugmittel eine Hülsenkette (10) dient, aus mit Abstand zueinander angeordneten (äusseren) Laschen (20) sowie (inneren) Laschen (21), die durch quergerichtete Bolzen mit darauf angeordneten Hülsen (25) an gelenkigen Verbindungsstellen zu aneinandergereihten Gliedern miteinander verbunden sind.

12. Stetigförderer nach Anspruch 11 sowie einem oder mehreren der weiteren Ansprüche, dadurch gekennzeichnet, dass die Gleitleiste (15) an ihrer Oberseite einen annähernd mittigen Steg (28) aufweist, der im Querschnitt korrespondierend zur (Quer-)Abmessung der Hülsenkette (10) ausgebildet ist, derart, dass der lichte Abstand zwischen zwei gegenüberliegenden (inneren) Laschen (21) der Hülsenkette (10) geringfügig grösser als die Breite des Steges (28) ist.

13. Stetigförderer nach Anspruch 11 sowie einem oder mehreren der weiteren Ansprüche, dadurch gekennzeichnet, dass an einem jeden zur Befestigung einer Staurolle (12, 39) dienenden Glied der Hülsenkette (10) ein Bolzen zur Verbindung der Glieder und der Laschen (20, 21) der Hülsenkette (10) durch einen Kragbolzen in Form eines Kettenbolzens (14) ersetzt ist.

14. Stetigförderer nach Anspruch 11 sowie einem oder mehreren der weiteren Ansprüche, dadurch gekennzeichnet, dass die Laschen (20, 21) eines jeden zur Befestigung einer Staurolle (12, 39) dienenden Gliedes der Hülsenkette (10) durch zwei paarweise hintereinanderliegende Kettenbolzen (14) verbunden sind, deren (freie) Enden zur gleichen Seite der Hülsenkette (10) auskragen und jeweils einen Bolzen zur Verbindung der Glieder der Hülsenkette (10) ersetzen.

15. Stetigförderer nach Anspruch 14 sowie einem oder mehreren der weiteren Ansprüche, dadurch gekennzeichnet, dass die Kettenbolzen (14) annähernd gleiche Länge aufweisen und sich seitlich neben der Hülsenkette (10) geringfügig über die Breite der Staurollen (12, 39) hinaus erstrecken.

16. Stetigförderer nach Anspruch 14, dadurch gekennzeichnet, dass mindestens auf einem der beiden paarweise hintereinanderliegenden Kettenbolzen (14) eine Staurolle (12, 39) angeordnet ist.

17. Stetigförderer nach Anspruch 14, dadurch gekennzeichnet, dass nur auf einem der hintereinanderliegenden Kettenbolzen (14) eine Staurolle (12, 39) gelagert ist und auf dem zweiten Kettenbolzen (14) eine Distanzhülse (30), die in ihrer Länge geringfügig über die Länge der Staurolle (12, 39) hinausgeht, angeordnet ist.

18. Stetigförderer nach Anspruch 1 sowie einem oder mehreren der weiteren Ansprüche, dadurch gekennzeichnet, dass die Staurollen (12, 39) aus Kunststoff, insbesondere Polyamid, bestehen.

19. Stetigförderer nach Anspruch 1 sowie einem oder mehreren der weiteren Ansprüche, dadurch gekennzeichnet, dass jede Staurolle (39) auf ihrer (äusseren) Mantelfläche einen Reibbelag (40) aufweist.

20. Stetigförderer nach Anspruch 19 sowie einem oder mehreren der weiteren Ansprüche, dadurch gekennzeichnet, dass die Reibbeläge (40) reibschlüssig auf den Staurollen (39) angeordnet sind.

21. Stetigförderer nach Anspruch 19 sowie einem oder mehreren der weiteren Ansprüche, dadurch gekennzeichnet, dass jede Staurolle (39) zwei seitliche Kragen (41) aufweist, zwischen denen der Reibbelag (40) angeordnet ist.

22. Stetigförderer nach Anspruch 21 sowie einem oder mehreren der weiteren Ansprüche, dadurch gekennzeichnet, dass die Kragen (41) im Aussendurchmesser geringfügig kleiner als der Aussendurchmesser der Reibbeläge (40) bemessen sind.

23. Stetigförderer nach Anspruch 19 sowie einem oder mehreren der weiteren Ansprüche, dadurch gekennzeichnet, dass die Reibbeläge (40) aus einem Elastomer, insbesondere Silikon, hergestellt sind.

24. Stetigförderer nach Anspruch 14, dadurch gekennzeichnet, dass auf den (freien) Enden der paarweise hintereinanderliegenden Kettenbolzen (14) zur axialen Sicherung der Staurollen (12, 39) bzw. der Staurolle (12, 39) und der Distanzhülse (30) auf den Kettenbolzen (14) eine letztere verbindende Stirnlasche (31) und ein Sicherungselement, insbesondere ein Kettenschloss (32), angeordnet sind.

25. Stetigförderer nach Anspruch 1, dadurch gekennzeichnet, dass zwischen jeder Stirnseite der Staurollen (12, 39) und den den Stirnseiten zugerichteten Seiten der (äusseren) Laschen (20) des betreffenden Gliedes der Hülsenkette (10) und der Stirnlaschen (31) mindestens eine (stillstehende) Anlaufscheibe (33) angeordnet ist.

26. Stetigförderer nach Anspruch 10, dadurch gekennzeichnet, dass wenigstens eine Stirnseite der Staurollen (12) eine innere Aufnahmebohrung (34) für mindestens ein Federelement, insbesondere eine Tellerfeder (35), aufweist.

27. Stetigförderer nach Anspruch 26 sowie einem oder mehreren der weiteren Ansprüche, dadurch gekennzeichnet, dass an jeder Stirnseite der Tellerfedern (35) eine (stillstehende) Anlaufscheibe (36) bzw. (33) angeordnet ist.

28. Stetigförderer nach Anspruch 26, dadurch gekennzeichnet, dass die Tiefe der Aufnahmebohrung (34) bzw. die Anzahl oder Dicke der Anlaufscheiben (33 bzw. 36) derart ist, dass die Tellerfeder (35) bzw. die Tellerfedern (35) einen axialen Druck der Anlaufscheiben (33, 36) gegen die Stirnseiten der jeweiligen Staurolle (12, 39) ausüben.

29. Stetigförderer nach Anspruch 14 sowie einem oder mehreren der weiteren Ansprüche, dadurch gekennzeichnet, dass die Gleitstücke (18) eine quaderförmige Gestalt aufweisen und jedes Gleitstück (18) an zwei Kettenbolzen (14) gelagert ist, die in analoger Weise zu den zur Lagerung der Staurollen (12, 39) dienenden Kettenbolzen (14) ausgebildet sind.

30. Stetigförderer nach Anspruch 6 sowie einem oder mehreren der weiteren Ansprüche, dadurch gekennzeichnet, dass jedes Gleitstück (18) eine Breite aufweist, die annähernd der halben Breite einer Staurolle (12, 39) entspricht.

31. Stetigförderer nach Anspruch 30, dadurch gekennzeichnet, dass zwischen der an der Seite des Gleitstückes (18) liegenden (äusseren) Lasche (20) der Hülsenkette (10) und der ihr zugerichteten Seite des Gleitstückes (18) auf jedem Kettenbolzen (14) eine Distanzhülse (38) angeordnet ist, die annähernd eine Länge des vom Gleitstück (18) freien Bereichs des Kettenbolzens (14) aufweist.

32. Stetigförderer nach Anspruch 30, dadurch gekennzeichnet, dass zwischen der Stirnlasche (31) und der ihr zugekehrten Seite des Gleitstückes (18) mindestens eine (dünne) Ausgleichsscheibe 24 auf jedem Kettenbolzen (14) angeordnet ist.

33. Stetigförderer nach Anspruch 6, dadurch gekennzeichnet, dass das Gleitstück (18) aus Kunststoff, insbesondere Polyamid, besteht.

## Revendications

1. Transporteur continu, en particulier transporteur à chaîne porteuse, pour le transport de charges isolées, de préférence de paquets de cigarettes, comportant des rouleaux (rouleaux d'accumulation) tournant librement et mus dans la direction de transport sur lesquels les charges isolées reposent et qui, lors d'une accumulation des charges isolées, se meuvent en tournant sous celles-ci, caractérisé par le fait que des rouleaux d'accumulation (12, 39) sont montés des deux côtés sur un organe tracteur unique (chaîne à douilles 10).

2. Transporteur continu selon la revendication 1, caractérisé par le fait que les rouleaux d'accumulation (12, 39) sont montés en porte à faux latéralement sur l'organe tracteur (chaîne à douilles 10).

3. Transporteur continu selon l'une des revendications 1 ou 2, caractérisé par le fait que l'organe tracteur (chaîne à douilles 10) repose sur un lardon de glissement (15) et est guidé par lui.

4. Transporteur continu selon la revendication 3 et une ou plusieurs des autres revendications, caractérisé par le fait que le lardon de glissement (15) est placé à peu près au milieu sur une glissière (16).

5. Transporteur continu selon la revendication 4 et une ou plusieurs des autres revendications, caractérisé par le fait que la glissière (16) est en U et présente une surface de glissement de préférence plane horizontale (17) et deux joues de guidage latérales à peu près verticales (19) pour le guidage latéral des charges isolées (barres de cigarettes 11), le lardon de glissement (15) étant placé au milieu sur la surface de glissement (17).

6. Transporteur continu selon la revendication 1 et une ou plusieurs des autres revendications, caractérisé par le fait que sur les deux côtés de l'organe tracteur (chaîne à douilles 10) sont montés, en étant décalés, des patins (18) qui reposent sur la glissière (16).

7. Transporteur continu selon la revendication 6 et une ou plusieurs des autres revendications, caractérisé par le fait qu'un patin (18) est adjoint à plusieurs rouleaux d'accumulation (12, 39).

8. Transporteur continu selon la revendication 1 et une ou plusieurs des autres revendications, caractérisé par le fait que les rouleaux d'accumulation (12, 39) sont montés, glissants, tournants sur des axes en porte à faux dirigés transversalement (axes de chaîne 14) fixés à l'organe tracteur (chaîne à douilles 10).

9. Transporteur continu selon la revendication 8 et une ou plusieurs des autres revendications, caractérisé par le fait que les rouleaux d'accumulation (12, 39) sont décalés les uns des autres dans la direction de transport (flèche 13).

10. Transporteur continu selon la revendication 1 et une ou plusieurs des autres revendications, caractérisé par le fait que les rouleaux d'accumulation (12, 39) sont pourvus d'un élément de friction.

11. Transporteur continu selon la revendication 1 et une ou plusieurs des autres revendications, caractérisé par le fait que comme moyen de traction est utilisée une chaîne à douilles (10) constituée d'éclisses (extérieures) (20) et d'éclisses (intérieures) (21) espacées qui sont réunies à des joints articulés par des axes transversaux sur lesquels sont montées des douilles (25), pour former des maillons alignés.

12. Transporteur continu selon la revendication 11 et une ou plusieurs des autres revendications, caractérisé par le fait que le lardon de glissement (15) présente sur le dessus une nervure à peu près médiane (28) dont la section correspond à la dimension (transversale) de la chaîne à douilles (10) de façon telle que l'intervalle entre deux éclisses (intérieures) en regard (21) de la chaîne à douilles (10) soit légèrement supérieur à la largeur de la nervure (28).

13. Transporteur continu selon la revendication 11 et une ou plusieurs des autres revendications, caractérisé par le fait que sur chaque maillon de la chaîne à douilles (10) servant à la fixation d'un rouleau d'accumulation (12, 39), un axe d'assemblage des maillons et des éclisses (20, 21) de la chaîne à douilles (10) est remplacé par un axe en porte à faux formant axe de chaîne (14).

14. Transporteur continu selon la revendication 11 et une ou plusieurs des autres revendications, caractérisé par le fait que les éclisses (20, 21) de chaque maillon de la chaîne à douilles (10) servant à la fixation d'un rouleau d'accumulation (12, 39) sont réunies par deux axes de chaîne (14) situés l'un derrière l'autre dont les extrémités (libres) saillent du même côté de la chaîne à douilles (10) et remplacent chacune un axe d'assemblage des maillons de la chaîne à douilles (10).

15. Transporteur continu selon la revendication 14 et une ou plusieurs des autres revendications, caractérisé par le fait que les axes de chaîne (14) ont à peu près la même longueur et s'étendent sur le côté de la chaîne à douilles (10) légèrement au-delà de la largeur des rouleaux d'accumulation (12, 39).

16. Transporteur continu selon la revendication 14, caractérisé par le fait que, sur au moins un des deux axes de chaîne (14) situés l'un derrière l'autre, est monté un rouleau d'accumulation (12, 39).

17. Transporteur continu selon la revendication 14, caractérisé par le fait qu'un rouleau d'accumulation (12, 39) est monté sur un des axes de chaîne (14) situés l'un derrière l'autre, et sur l'autre axe de chaîne (14) est montée une douille entretoise (30) qui dépasse légèrement en longueur la longueur du rouleau d'accumulation (12, 39).

18. Transporteur continu selon la revendication 1 et une ou plusieurs des autres revendications, caractérisé par le fait que les rouleaux d'accumulation (12, 39) sont en matière plastique, en particulier en polyamide.

19. Transporteur continu selon la revendication 1 et une ou plusieurs des autres revendications, caractérisé par le fait que chaque rouleau d'accumulation (39) présente sur sa surface latérale (extérieure) une garniture de friction (40).

20. Transporteur continu selon la revendication 19 et une ou plusieurs des autres revendications, caractérisé par le fait que les garnitures de friction (40) sont montées à friction sur les rouleaux d'accumulation (39).

21. Transporteur continu selon la revendication 19 et une ou plusieurs des autres revendications, caractérisé par le fait que chaque rouleau d'accumulation (39) présente deux collets latéraux (41) entre lesquels est placée la garniture de friction (40).

22. Transporteur continu selon la revendication 21 et une ou plusieurs des autres revendications, caractérisé par le fait que le diamètre extérieur des collets (41) est légèrement inférieur au diamètre extérieur des garnitures de friction (40).

23. Transporteur continu selon la revendication 19 et une ou plusieurs des autres revendications, caractérisé par le fait que les garnitures de friction (40) sont en élastomère, en particulier en silicone.

24. Transporteur continu selon la revendication 14, caractérisé par le fait que sur les extrémités (libres) des axes de chaîne (14) situés l'un derrière l'autre appariés sont montés, pour l'arrêt axial des rouleaux d'accumulation (12, 39) ou du rouleau d'accumulation (12, 39) et de la douille entretoise (30) sur les axes de chaîne (14), une éclisse frontale (31) réunissant ces derniers et un élément d'arrêt, en particulier un joint de chaîne (32).

25. Transporteur continu selon la revendication 1, caractérisé par le fait qu'entre chaque face frontale des rouleaux d'accumulation (12, 39) et les faces dirigées vers les faces frontales des éclisses (extérieures) (20) du maillon correspondant de la chaîne à douilles (10) et des éclisses frontales (31), est placée au moins une rondelle (fixe) d'appui (33).

26. Transporteur continu selon la revendication 10, caractérisé par le fait qu'au moins une face frontale des rouleaux d'accumulation (12) présente un trou (34) destiné à recevoir au moins un élément élastique, en particulier une rondelle Belleville (35).

27. Transporteur continu selon la revendication 26 et une ou plusieurs des autres revendications, caractérisé par le fait que contre chaque face frontale des rondelles Belleville (35) est placée une rondelle (fixe) d'appui (36 ou 33).

28. Transporteur continu selon la revendication 26, caractérisé par le fait que la profondeur du trou (34), ou le nombre ou l'épaisseur des rondelles d'appui (33 ou 36), est tel (le) que la ou les rondelles Belleville (35) produisent un serrage axial des rondelles d'appui (33, 36) contre les faces frontales du rouleau d'accumulation associé (12, 39).

29. Transporteur continu selon la revendication 14 et une ou plusieurs des autres revendications, caractérisé par le fait que les patins (18) ont la forme d'un parallélépipède rectangle et chaque patin (18) est monté sur deux axes de chaîne (14) semblables aux axes de chaîne (14) qui servent au montage des rouleaux d'accumulation (12, 39).

30. Transporteur continu selon la revendication 6 et une ou plusieurs des autres revendications, caractérisé par le fait que chaque patin (18) a une largeur qui correspond à peu près à la moitié de la largeur d'un rouleau d'accumulation (12, 39).

31. Transporteur continu selon la revendication 30, caractérisé par le fait qu'entre l'éclisse (extérieure) (20) de la chaîne à douilles (10) située sur le côté du patin (18) et la face dirigée vers elle du patin (18) est montée sur chaque axe de chaîne (14) une douille entretoise (38) qui a à peu près la longueur de la zone de l'axe de chaîne (14) dépourvue du patin (18).

32. Transporteur continu selon la revendication 30, caractérisé par le fait qu'entre l'éclisse frontale (31) et la face du patin (18) dirigée vers elle est montée sur chaque axe de chaîne (14) au moins une rondelle entretoise (mince) (24).

33. Transporteur continu selon la revendication 6, caractérisé par le fait que le patin (18) est en matière plastique, en particulier en polyamide.

## Claims

1. Continuous conveyor, in particular carrying chain conveyor, for conveying piece goods, preferably cigarette packets, with freely rotating rollers (accumulation rollers) moving in the conveying direction, on which the piece goods rest and which in the case of an accumulation of the piece goods move whilst rotating below the latter, characterised in that accumulation rollers (12, 39) are arranged on both sides of an individual traction member (sleeve-type chain 10).

2. Continuous conveyor according to Claim 1, characterised in that the accumulation rollers (12, 39) are arranged to jut out laterally from the traction member (sleeve-type chain 10).

3. Continuous conveyor according to Claim 1 or 2, characterised in that the traction member (sleeve-type chain 10) rests on a slide bar (15) and is guided by the latter.

4. Continuous conveyor according to Claim 3 and one or more of the other Claims, characterised in that the slide bar (15) is arranged approximately centrally on a slideway (16).

5. Continuous conveyor according to Claim 4 and one or more of the other Claims, characterised in that the slideway (16) has a U-shaped construction and comprises a preferably flat, horizontal sliding surface (17) with two lateral, approximately upright guide cheeks (19) for the lateral guidance of the piece goods (cigarette blocks 11), in which case the slide bar (15) is located centrally on the sliding surface (17).

6. Continuous conveyor according to Claim 1 and one or more of the other Claims, characterised in that staggered on both sides of the traction member (sleeve-type chain 10) are sliding members (18) resting on the slideway (16).

7. Continuous conveyor according to Claim 6 and one or more of the other Claims, characterised in that a sliding member (18) respectively is associated with several accumulation rollers (12, 39).

8. Continuous conveyor according to Claim 1 and one or more of the other Claims, characterised in that the accumulation rollers (12, 39) are slidingly mounted to rotate on transversely directed cantilever pins (chain pins 14) securely connected to the traction member (sleeve-type chain 10).

9. Continuous conveyor according to Claim 8 and one or more of the other Claims, characterised in that the accumulation rollers (12, 39) are offset with respect to each other in the conveying direction (arrow 13).

10. Continuous conveyor according to Claim 1 and one or more of the other Claims, characterised in that the accumulation rollers (12, 39) are provided with a friction member.

11. Continuous conveyor according to Claim 1 and one or more of the other Claims, characterised in that a sleeve-type chain (10) serves as traction means, which sleeve-type chain consists of (outer) cover plates (20) arranged at a distance apart and (inner) cover plates (21), which are connected to each other by transversely directed pins with sleeves (25) located thereon at articulated connecting points to form members arranged in rows.

12. Continuous conveyor according to Claim 11 and one or more of the other Claims, characterised in that on its upper side the slide bar (15) comprises an approximately central web (28), which as regards cross section is constructed to correspond to the (transverse) dimension of the sleeve-type chain (10) so that the inside spacing between two opposing (inner) cover plates (21) of the sleeve-type chain (10) is slightly greater than the width of the web (28).

13. Continuous conveyor according to Claim 11 and one or more of the other Claims, characterised in that on each member of the sleeve-type chain (10) serving for the attachment of an accumulation roller (12, 39), a bolt for connecting the members and the cover plates (20, 21) of the sleeve-type chain (10) is replaced by a cantilever pin in the form of a chain pin (14).

14. Continuous conveyor according to Claim 11 and one or more of the other Claims, characterised in that the cover plates (20, 21) of each member of the sleeve-type chain (10) serving for the attachment of an accumulation roller (12, 39) are connected by two chain pins (14) lying one behind the other in pairs, whereof the (free) ends jut out towards the same side of the sleeve-type chain (10) and each replace a bolt for connecting the members of the sleeve-type chain (10).

15. Continuous conveyor according to Claim 14 and one or more of the other Claims, characterised in that the chain pins (14) are of approximately the same length and extend laterally beside the sleeve-type chain (10) slightly beyond the width of the accumulation rollers (12, 39).

16. Continuous conveyor according to Claim 14, characterised in that an accumulation roller (12, 39) is arranged at least on one of the two chain pins (14) lying one behind the other in pairs.

17. Continuous conveyor according to Claim 14, characterised in that an accumulation roller (12, 39) is mounted solely on one of the chain pins (14) lying one behind the other and a spacer sleeve (30) is located on the second chain pin (14), which in its length projects slightly beyond the length of the accumulation roller (12, 39).

18. Continuous conveyor according to Claim 1 and one or more of the other Claims, characterised in that the accumulation rollers (12, 39) consist of synthetic material, in particular polyamide.

19. Continuous conveyor according to Claim 1 and one or more of the other Claims, characterised in that each accumulation roller (39) comprises a friction lining (40) on its (outer) surface.

20. Continuous conveyor according to Claim 19 and one or more of the other Claims, characterised in that the friction linings (40) are arranged by frictional resistance on the accumulation rollers (39).

21. Continuous conveyor according to Claim 19 and one or more of the other Claims, characterised in that each accumulation roller (39) comprises two lateral collars (41), between which the friction lining (40) is located.

22. Continuous conveyor according to Claim 21 and one or more of the other Claims, characterised in that the outer diameters of the collars (41) are slightly smaller than the outer diameter of the friction linings (40).

23. Continuous conveyor according to Claim 19 and one or more of the other Claims, characterised in that the friction linings (40) are made from an elastomer, in particular silicone.

24. Continuous conveyor according to Claim 14, characterised in that provided on the (free) ends of the chain pins (14) lying one behind the other in pairs for the axial securing of the accumulation rollers (12, 39) or of the accumulation roller (12, 39) and the spacer sleeve (30) on the chain pins (14) is an end cover plate (31) and a securing member, in particular a chain lock (32) connecting the latter.

25. Continuous conveyor according to Claim 1, characterised in that at least one (stationary) thrust washer (33) is located between each end face of the accumulation rollers (12, 39) and the sides of the (outer) cover plates (20) of the respective member of the sleeve-type chain (10) and of the end cover plates (31) directed towards the end faces.

26. Continuous conveyor according to Claim 10, characterised in that at least one end face of the accumulation rollers (12) comprises an inner receiving bore (34) for at least one spring member, in particular a cup spring (35).

27. Continuous conveyor according to Claim 26 and one or more of the other Claims, characterised in that a (stationary) thrust washer (36, 33) is located on each end face of the cup springs (35).

28. Continuous conveyor according to Claim 26, characterised in that the depth of the receiving bore (34) or the number or thickness of thrust washers (33, 36) is such that the cup spring (35) or the cup springs (35) exert an axial pressure of the thrust washers (33, 36) against the end faces of the respective accumulation roller (12, 39).

29. Continuous conveyor according to Claim 14 and one or more of the other Claims, characterised in that the sliding members (18) have a block-like shape and each sliding member (18) is mounted on two chain pins (14), which are constructed in a similar manner to the chain pins (14) serving for mounting the accumulation rollers (12, 39).

30. Continuous conveyor according to Claim 6 and one or more of the other Claims, characterised in that each sliding member (18) has a width which corresponds approximately to half the width of an accumulation roller (12, 39).

31. Continuous conveyor according to Claim 30, characterised in that a spacer sleeve (38) is located between the (outer) cover plate (20) of the sleeve-type chain (10) located on the side of the sliding member (18) and the facing side of the sliding member (18) on each chain pin (14), which spacer sleeve has approximately the length of the region of the chain pin (14) which is free of the sliding member (18).

32. Continuous conveyor according to Claim 30, characterised in that located between the end cover plate (31) and the facing side of the sliding member (18) is at least one (thin) compensating disc (24) on each chain pin (14).

33. Continuous conveyor according to Claim 6, characterised in that the sliding member (18) consists of synthetic material, in particular polyamide.

## Fig. 1

Fig. 2

Fig. 3

# Fig. 4

# Fig. 5

Fig. 6

# Fig. 7

# Fig. 8